(19) Europäisches Patentamt
European Patent Office
Office européen des brevets

(11) **EP 3 659 836 B1**

(12) **EUROPÄISCHE PATENTSCHRIFT**

(45) Veröffentlichungstag und Bekanntmachung des Hinweises auf die Patenterteilung:
**17.11.2021 Patentblatt 2021/46**

(51) Int Cl.:
***B60G 17/0165*** *(2006.01)*   ***B60G 17/019*** *(2006.01)*

(21) Anmeldenummer: **19207772.5**

(22) Anmeldetag: **07.11.2019**

(54) **VERFAHREN ZUR ANPASSUNG DER HÖHE EINES AUFLIEGERS**

METHOD FOR ADJUSTING THE HEIGHT OF A TRAILER

PROCÉDÉ D'AJUSTEMENT DE LA HAUTEUR D'UNE SEMI-REMORQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2018 DE 102018130233**

(43) Veröffentlichungstag der Anmeldung:
**03.06.2020 Patentblatt 2020/23**

(73) Patentinhaber: **ZF CV Systems Hannover GmbH**
**30453 Hannover (DE)**

(72) Erfinder:
• **STENDER, Axel**
  **31787 Hameln (DE)**
• **WINKEL, Marcel**
  **30449 Hannover (DE)**
• **DIET, Felix**
  **31552 Rodenberg (DE)**
• **RIEDEL-KUJAS, Wolfgang Uwe**
  **31637 Rodewald (DE)**

(74) Vertreter: **Ohlendorf, Henrike**
**ZF CV Systems Hannover GmbH**
**Am Lindener Hafen 21**
**30453 Hannover (DE)**

(56) Entgegenhaltungen:
| | |
|---|---|
| EP-A2- 1 449 688 | DE-A1- 19 752 108 |
| DE-A1- 19 801 546 | DE-A1-102007 006 265 |
| DE-A1-102007 015 954 | DE-A1-102007 051 262 |
| DE-A1-102014 012 841 | DE-A1-102016 119 356 |
| FR-A1- 2 672 561 | GB-A- 2 552 661 |

## Beschreibung

Die Erfindung betrifft ein Verfahren zur Anpassung der Höhe eines Aufliegers an die Höhe eines Motorwagens mit Sattelplatte, wobei der Auflieger ein Auflieger-Chassis, wenigstens eine Achse und eine höhenverstellbare Federung aufweist, mit einer Ist-Neigung des Auflieger-Chassis relativ zu einer Fahrwerksgeraden, welche in Fahrtrichtung und parallel zu einer Fahrbahnoberfläche verläuft. Daneben betrifft die Erfindung ein Steuergerät, ein System zur Durchführung des Verfahrens und einen Auflieger.

Als Auflieger wird hier eine besondere Form eines Anhängers verstanden, nämlich ein Anhänger mit Königszapfen und zur Verbindung mit einem Motorwagen mit Sattelplatte. Der Motorwagen wird auch als Sattelzugmaschine bezeichnet.

Moderne Auflieger (und Motorwagen) sind mit einer höhenverstellbaren Federung ausgestattet, insbesondere mit einer Luftfederung. Mit der Federung kann der Abstand zwischen Auflieger-Chassis und Fahrwerk verstellt werden. Auch ist eine Anpassung an unterschiedliche Ladungen möglich.

Auflieger weisen zumeist ein Fahrwerk mit mehreren Achsen auf, die eine Fahrwerksebene definieren. Bei einem Auflieger mit nur einer Achse erstreckt sich die Fahrwerksebene durch diese Achse und parallel zu einer Fahrbahnoberfläche. Bei Neigung des Auflieger-Chassis relativ zur Fahrwerksebene ergeben sich unterschiedliche Abstände zwischen dem Auflieger-Chassis und der Fahrwerksebene. Dies kann in speziellen Situationen sinnvoll sein, ist aber während der Fahrt meist nicht erwünscht. Betrachtet wird hier eine Neigung des Auflieger-Chassis relativ zur Fahrtrichtung, also eine in Fahrtrichtung zunehmende oder abnehmende Höhe des Auflieger-Chassis. Zur Vereinfachung wird eine in Fahrtrichtung und parallel zur Fahrbahnoberfläche verlaufende Fahrwerksgerade definiert, gegenüber der das Auflieger-Chassis eine Neigung mit einem bestimmbaren Winkel aufweisen kann. Die Fahrwerksgerade verläuft aufgrund der Definition zwingend parallel zur Fahrwerksebene, kann in der Fahrwerksebene verlaufen, aber auch darüber oder darunter. Es kommt hier nur auf die Neigung des Auflieger-Chassis relativ zur Fahrwerksgeraden an, nicht auf den Abstand der Fahrwerksgeraden zur Fahrbahnoberfläche.

Die Höhe der Sattelplatte eines Motorwagens ist nicht streng genormt. Aus unterschiedlichen Gründen können sich Abweichungen ergeben, z. B.:

-  länderspezifische Motorwagenausführungen (in Großbritannien sind die Sattelplatten 100 mm höher als in Deutschland),
-  verschiedene Reifengrößen, etwa 19 Zoll und 22 Zoll,
-  verschiedene Motorwagen-Varianten, etwa sogenannte Low Liner.

Wenn die Sattelplattenhöhe des Motorwagens nicht zur Höhe des Auflieger-Chassis passt, resultiert daraus ein Schiefstand des Auflieger-Chassis, nachfolgend auch als Neigung des Aufliegers bezeichnet. Damit können folgende Nachteile verbunden sein:

-  schlechtere Aerodynamik,
-  schlechteres Fahrverhalten,
-  ungleichmäßige Höhe,
-  ungleichmäßiger Federweg von Tragbälgen der Luftfederung,
-  ungleichmäßige Lastverteilung auf die einzelnen Achsen,
-  Überschreitung der gesetzlich zulässigen Fahrzeughöhe.

Um den Schiefstand des Aufliegers auszugleichen, müssen entweder das Niveau des Motorwagens oder das Niveau des Aufliegers manuell geändert werden.

DE 10 2007 015 954 A1 offenbart ein Kraftfahrzeug mit Achsen mit Fluidfedereinheiten. Die Fluidfedereinheiten weisen Fluiddrucksensoren auf, die genutzt werden, um Asymmetrien der Ladung auszugleichen und das Kraftfahrzeug gegen Kippen zu stabilisieren. Es ist offenbart, dass bei einer ungleichmäßigen Gewichtsverteilung ein Nutzraum eines Aufliegers ein Gefälle nach hinten aufweist, was durch unterschiedliche Federwege an den Fluidfedereinheiten der verschiedenen Achsen des Aufliegers nachgewiesen werden kann. Es wird aus den Federwegen unter Berücksichtigung von Achsenabständen ein Winkel der Schräglage bestimmt. Durch Einpumpen von Druckluft in Luftfederbälge von hinten liegenden Achsen und gegebenenfalls gleichzeitiges Ablassen von Druckluft aus Fluidfedereinheiten der am weitesten vorn liegenden Achse wird der Winkel der Schräglage verringert.

Die Dokumente DE 10 2007 006 265 A1, FR 2 672 561 A 1 und DE 197 52 108 A1 zeigen jeweils Verfahren mit Auswertung einer Neigung einer Sattelplatte auf.

Aufgabe der vorliegenden Erfindung ist die Schaffung eines Verfahrens zur automatischen Anpassung der Höhe des Aufliegers an die Höhe des Motorwagens.

Zur Lösung der Aufgabe weist das erfindungsgemäße Verfahren die Merkmale des Anspruchs 1 auf. Es sind folgende Schritte vorgesehen:

> a) Ermittlung der Ist-Neigung des Auflieger-Chassis relativ zur Fahrwerksgeraden,
> b) Vergleich der Ist-Neigung mit einer Soll-Neigung des Auflieger-Chassis,
> c) Verstellung der höhenverstellbaren Federung, bis die Ist-Neigung der Soll-Neigung entspricht.

Das Verfahren wird automatisiert durchgeführt. Die Ist-Neigung ist gleich einem Winkel $\alpha$ zwischen Auflieger-Chassis und Fahrwerksgeraden. Als Soll-Neigung wird vorzugsweise eine Ausrichtung parallel zur Fahrwerksgeraden oder Fahrwerksebene angestrebt, also ein Winkel von Null Grad. Alternativ kann auch ein Winkel größer oder kleiner Null relativ zur Fahrwerksgeraden als Soll-Neigung vorgegeben werden. So kann eine Soll-Neigung mit einem Winkel größer Null beispielsweise vorgegeben werden, um den Luftwiderstand der Kombination aus Motorwagen und Auflieger zu optimieren.

Es werden zur Ermittlung der Ist-Neigung $\alpha$ wenigstens Signale eines Sensors im Motorwagen ausgewertet. Die Ist-Neigung des Aufliegers kann auch vom Motorwagen aus erfasst werden. Hierzu müssen im Motorwagen geeignete Sensoren an geeigneter Stelle vorgesehen sein. Die Signale des betreffenden Sensors können vom Motorwagen zum Auflieger übertragen werden zur Verstellung der höhenverstellbaren Federung. Eine Übertragung ist beispielsweise per Funk möglich oder über eine genormte Datenschnittstelle oder eine analoge Leitung.

Es werden wenigstens Signale eines Sensors zur Bestimmung der Neigung der Sattelplatte des Motorwagens ausgewertet. Bei angekoppeltem Auflieger entspricht die Neigung der Sattelplatte der Ist-Neigung des Auflieger-Chassis. Über einen Sensor an der Sattelplatte kann deshalb die Ist-Neigung des Aufliegers ermittelt werden.

Nach einem weiteren Gedanken der Erfindung kann vorgesehen sein, dass zur Ermittlung der Ist-Neigung $\alpha$ wenigstens Signale eines Sensors im Auflieger ausgewertet werden. Der Sensor ist dann Teil eines Systems, mit dem das Verfahren durchgeführt wird.

Nach einem weiteren Gedanken der Erfindung kann vorgesehen sein, dass zur Ermittlung der Ist-Neigung $\alpha$ wenigstens Signale von zwei in Fahrtrichtung mit Abstand zueinander angeordneten Höhensensoren ausgewertet werden. Die Höhensensoren sind am Auflieger-Chassis angeordnet und messen den Abstand zur Fahrwerksgeraden oder zu den Achsen. Vorzugsweise sind die Höhensensoren senkrecht oberhalb der Achsen angeordnet oder mit geringem waagerechtem Abstand hierzu. Mit zwei Höhensensoren werden zwei Höhen ermittelt, die sich unterscheiden, sofern eine Ist-Neigung $\alpha > 0$ vorliegt. Aus der Differenz der Höhen und der Geometrie des Aufliegers ist die Größe der Ist-Neigung $\alpha$ berechenbar, ebenso eine Höhe $\Delta$SP der Sattelplatte. Ein besonderer Vorteil der Verwendung der genannten Höhensensoren liegt darin, dass eine Fahrbahnoberfläche mit Steigung oder Gefälle das Messergebnis und damit die Ermittlung der Ist-Neigung $\alpha$ nicht beeinflusst.

Nach einem weiteren Gedanken der Erfindung kann vorgesehen sein, dass zur Ermittlung der Ist-Neigung wenigstens Signale eines Beschleunigungssensors oder Winkelsensors ausgewertet werden. Ein Winkelsensor misst unmittelbar die Schiefstellung des Auflieger-Chassis relativ zur Fahrwerksgeraden, insbesondere bei zwei oder mehr Achsen. Ein Beschleunigungssensor ist zur mittelbaren Erfassung der Ist-Neigung geeignet. Der Beschleunigungssensor ist so am Auslieger-Chassis angeordnet, dass bei Ausrichtung des Auflieger-Chassis parallel zur Fahrwerksgeraden die Auflieger-Beschleunigung in Fahrtrichtung (X-Richtung des Sensors) detektiert wird. Bei Aufwärts- oder Abwärtsneigung des Auflieger-Chassis ist auch der Beschleunigungssensor mit seiner X-Richtung entsprechend geneigt, sodass nicht mehr allein die Beschleunigung des Auflieger-Chassis in Fahrtrichtung gemessen wird, sondern zusätzlich eine Komponente der Erdbeschleunigung g. Bei Stillstand des Aufliegers wird nur die Komponente der Erdbeschleunigung g gemessen, sodass daraus die Ist-Neigung des Auflieger-Chassis ermittelbar ist.

Nach einem weiteren Gedanken der Erfindung kann vorgesehen sein, dass wenigstens Signale eines Winkelsensors oder eines Beschleunigungssensors an der Sattelplatte ausgewertet werden. Der Winkelsensor erfasst den Winkel der Sattelplatte relativ zum Motorwagen-Chassis. Sofern Letzteres keine Neigung zu einer Fahrwerksgeraden des Motorwagens aufweist, ergibt sich automatisch auch eine Berücksichtigung der Neigung der Fahrbahnoberfläche. Das heißt, eine Steigung oder ein Gefälle der Fahrbahnoberfläche beeinflussen die Messung nicht. Der Beschleunigungssensor detektiert den oben bereits erwähnten Anteil der Erdbeschleunigung.

Nach einem weiteren Gedanken der Erfindung kann vorgesehen sein, dass als Soll-Neigung eine von Null verschiedene Neigung relativ zur Fahrwerksgeraden vorgegeben wird. Das bedeutet, dass ein Winkel der Soll-Neigung positiv oder negativ ist, also von Null verschieden. Eine derartige Soll-Neigung kann in besonderen Anwendungsfällen vorteilhaft sein, etwa zur Optimierung des Luftwiderstands oder zur Anpassung an eine maximal zulässige Gesamthöhe.

Gegenstand der Erfindung ist auch ein Steuergerät, eingerichtet zur Durchführung des Verfahrens nach einem der Ansprüche 1 bis 6. Das Steuergerät weist Schnittstellen zur Ansteuerung einer höhenverstellbaren Federung eines Aufliegers und Schnittstellen für Signale von Sensoren oder hierzu korrespondierenden Daten auf, sowie eine Software zur Durchführung des Verfahrens. Vorzugsweise handelt es sich um ein elektronisches Bremsensteuergerät, insbesondere auch zur Steuerung einer Luftfederung.

Gegenstand der Erfindung ist auch ein System zur Durchführung des Verfahrens nach einem der Ansprüche 1 bis 6. Das System weist ein Steuergerät nach Anspruch 7 auf, wenigstens einen Sensor zur Ermittlung einer Ist-Neigung eines Aufliegers und eine höhenverstellbare Federung für den Auflieger.

Vorteilhafterweise ist die höhenverstellbare Federung eine Luftfederung mit Tragbälgen.

Schließlich ist Gegenstand der Erfindung auch ein Auflieger mit einem System nach einem der Ansprüche 8 oder 9.

Weitere Merkmale der Erfindung ergeben sich aus der Beschreibung im Übrigen und aus den Patentansprüchen. Vorteilhafte Beispiele werden nachfolgend anhand von Zeichnungen näher erläutert. Es zeigen:

Fig. 1 einen Lastzug mit Motorwagen und Auflieger in schematischer Darstellung,

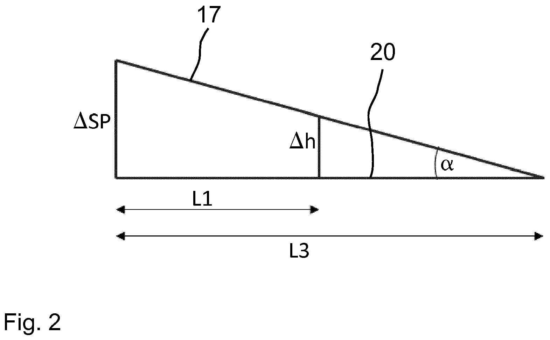

Fig. 2 eine vereinfachte Grafik zur Darstellung der Ermittlung einer Ist-Neigung $\alpha$ des Aufliegers und einer Sattelplattenhöhe $\Delta$SP,

Fig. 3 eine Darstellung entsprechend Fig. 1, mit einem anderen Sensor,

Fig. 4 eine vereinfachte Grafik zur Darstellung der Ermittlung der Ist-Neigung $\alpha$ mit einem Beschleunigungssensor,

Fig. 5 eine vereinfachte Grafik zur Darstellung der Ermittlung der Sattelplattenhöhe aus dem Winkel $\alpha$ und einem Abstand L2,

Fig. 6 eine Darstellung entsprechend Fig. 1, jedoch mit einem Sensor am Motorwagen.

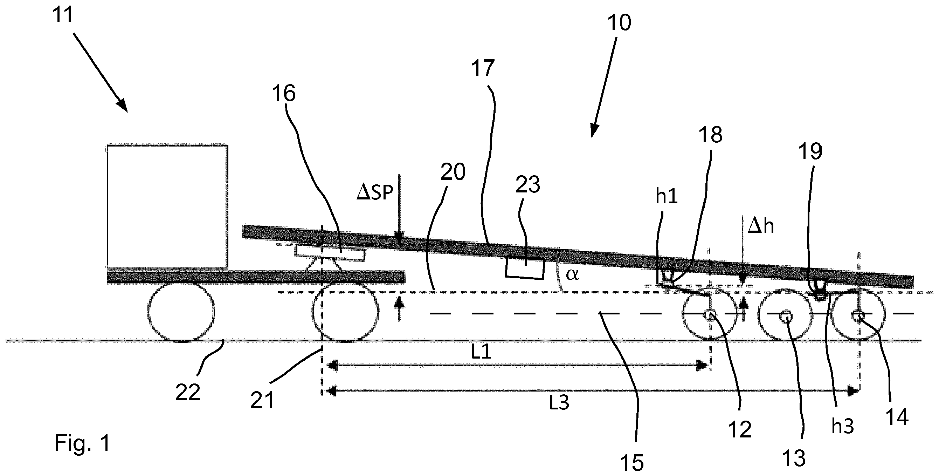

Gemäß Fig. 1 besteht ein Lastzug aus einem Auflieger 10 und einem Motorwagen 11. Der Auflieger 10 weist hier ein Fahrwerk mit mehreren Achsen auf, im vorliegenden Ausführungsbeispiel drei Achsen 12, 13, 14. Die Achsen 12, 13, 14 des Fahrwerks bilden eine Fahrwerksebene 15. Der Motorwagen 11 weist eine Sattelplatte 16 zur Aufnahme eines nicht gezeigten Königszapfens des Aufliegers 10 auf.

Der Auflieger 10 ist mit einer Luftfederung versehen, sodass ein Auflieger-Chassis 17 relativ zur Fahrwerksebene 15 federnd gelagert ist. Außerdem ist die Luftfederung höhenverstellbar.

Am Auflieger-Chassis 17 sind ein vorderer Höhensensor 18 und ein hinterer Höhensensor 19 angeordnet, mit denen die Höhe des Auflieger-Chassis 17 relativ zur Fahrwerksebene 15 oder einer hierzu parallelen Ebene detektierbar ist. Die derart vom vorderen Höhensensor 18 detektierte Höhe wird als h1 bezeichnet, die vom hinteren Höhensensor 19 detektierte Höhe als h3. Da das Auflieger-Chassis 17 in Fig. 1 in Fahrtrichtung aufwärts geneigt ist, ist die Differenz der Höhen h1 - h3 = $\Delta$h positiv. Die tatsächliche Neigung des Auflieger-Chassis 17 wird hier als Ist-Neigung bezeichnet, dargestellt durch einen Winkel $\alpha$ zwischen dem Auflieger-Chassis 17 und der Fahrwerksebene 15. Derselbe Winkel $\alpha$ ergibt sich zwischen dem Auflieger-Chassis 17 und einer Fahrwerksgeraden 20, welche in Fahrtrichtung parallel zur Fahrwerksebene 15 durch den hinteren Höhensensor 19 verläuft.

In Fig. 1 bezeichnet die Strecke L1 den Abstand von der vorderen Achse 12 zu einer Senkrechten 21. Diese steht senkrecht zu einer Fahrbahnoberfläche 22 und erstreckt sich durch die Sattelpatte 16. Die Fahrwerksebene 15 und die Fahrwerksgerade 20 verlaufen parallel zur Fahrbahnoberfläche 22.

Eine Strecke L3 bezeichnet den Abstand zwischen der hinteren Achse 14 und der Senkrechten 21. Die Ist-Neigung $\alpha$ und eine Höhe $\Delta$SP der Sattelplatte 16 über der Fahrwerksgeraden 20 lassen sich aus den dargestellten Größen errechnen:

$$\text{Gleichung 1:} \qquad \Delta SP = \Delta h * L_3/(L_3 - L_1)$$

$$\text{Gleichung 2:} \qquad \alpha = \arctan(\Delta h /(L_3 - L_1))$$

Der Auflieger 10 weist ein elektronisches Steuergerät 23 für die Steuerung von nicht gezeigten Tragbälgen einer Luftfederung auf. Das Steuergerät 23 kann zugleich Steuergerät für ein elektronisches Bremssystem des Aufliegers 10 sein. Die Höhensensoren 18, 19 sind an das Steuergerät 23 angeschlossen. Im Steuergerät 23 sind Daten zur Geometrie des Aufliegers 10 hinterlegt, so beispielsweise die Strecken L1 und L3.

Im Steuergerät 23 ist ein Algorithmus implementiert, mit dem unter bestimmten Betriebsbedingungen automatisch die Ist-Neigung des Auflieger-Chassis 17 ermittelt und mit einer Soll-Neigung verglichen wird. Anschließend wird die Federung durch Ansteuerung der Tragbälge in der Höhe solange verstellt, bis die Ist-Neigung der Soll-Neigung entspricht. Vorzugsweise wird die automatische Anpassung direkt nach der Verbindung des Aufliegers 10 mit dem Motorwagen 11 durchgeführt, also beispielsweise sobald der Auflieger 10 an die Stromversorgung des Motorwagens 11 angeschlossen ist. Denkbar ist auch eine manuelle Auslösung der automatischen Anpassung. Eine Bedienungsperson muss dann nicht die Ist-Neigung von außen beurteilen und gezielt eine andere Neigung einstellen. Vielmehr wird dies vom Steuergerät 23 erledigt.

Ein besonderer Vorteil der Verwendung der in Fig. 1 gezeigten Höhensensoren 18, 19 liegt darin, dass die Höhenanpassung auch funktioniert, wenn Auflieger 10 und Motorwagen 11 auf einer Fahrbahnoberfläche mit Steigung oder Gefälle stehen.

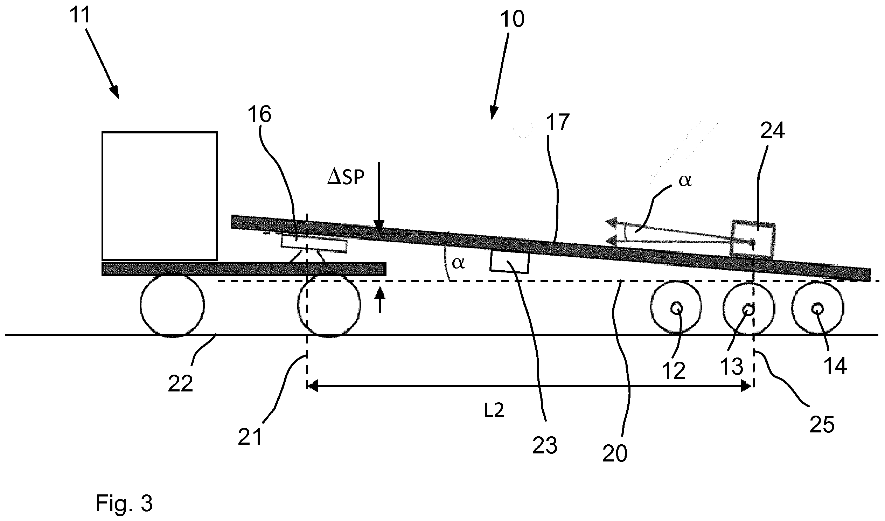

Fig. 3 zeigt eine andere Art der Messung der Ist-Neigung $\alpha$. Als Sensor wird hier ein Beschleunigungssensor 24 genutzt. Derartige Sensoren sind in modernen Fahrzeugen mit elektronischem Bremssystem ohnehin eingebaut oder zumindest günstig erhältlich und nachrüstbar. Der Beschleunigungssensor 24 ist mit dem Auflieger-Chassis 17 verbunden und kann so dessen Ist-Neigung detektieren, zumindest dann, wenn Auflieger 10 und Motorwagen 11 auf waagerechter Fahrbahnoberfläche 22 stehen.

Bei geneigtem Auflieger-Chassis 17 zeigt der Beschleunigungssensor 24 eine Komponente der Erdbeschleunigung g an, nämlich $a_x$. Gemeint ist damit die Beschleunigung in x-Richtung des Beschleunigungssensors 24. Je stärker das Auflieger-Chassis 17 geneigt ist, umso größer ist auch $a_x$. Der Winkel $\alpha$ der Ist-Neigung ergibt sich aus

$$\text{Gleichung 3:} \qquad \alpha = \arcsin\,(a_x/g)$$

Eine Senkrechte 25 durch den Beschleunigungssensor 24 weist von der senkrechten 21 einen Abstand entsprechend der Strecke L2 auf. Die Sattelplattenhöhe $\triangle$SP ergibt sich aus

$$\text{Gleichung 4:} \qquad \triangle SP = \tan\alpha\,L_2$$

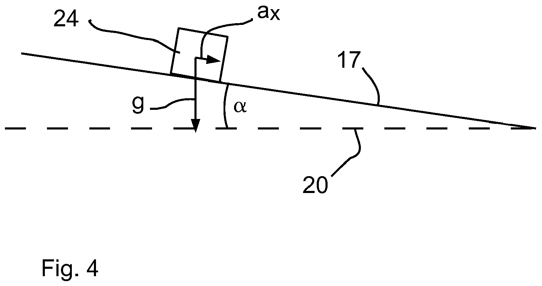

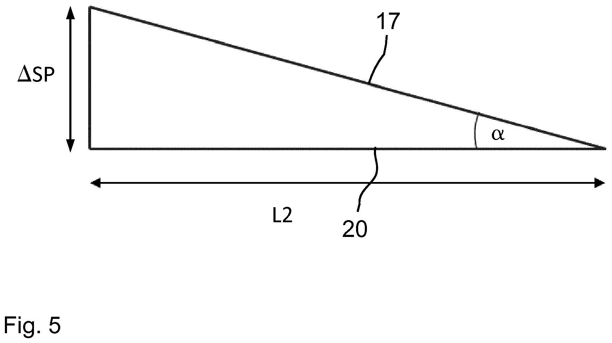

Zur Berechnung von $\alpha$ aus $a_x$ und $\triangle$SP aus $\alpha$ und L2 siehe auch Fig. 4 und 5.

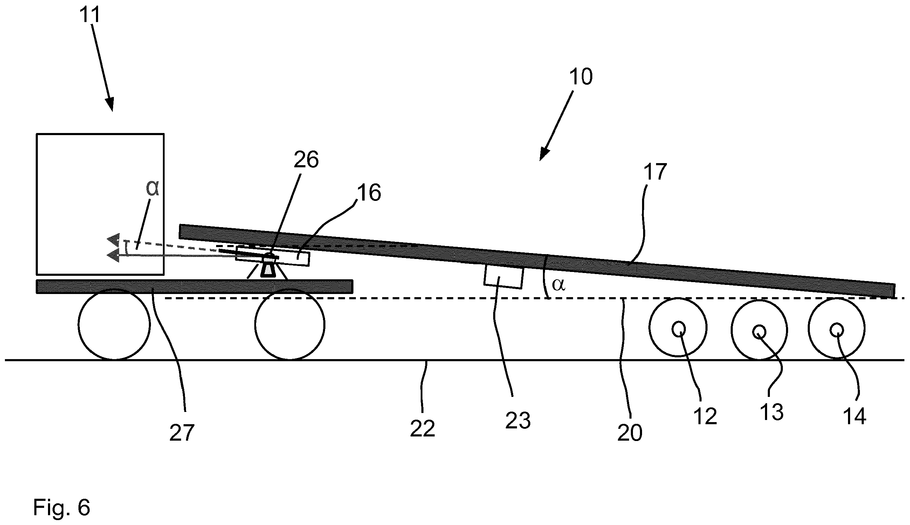

Eine andere Art der Berechnung der Ist-Neigung $\alpha$ zeigt Fig. 6. Dort weist die Sattelplatte 16 einen Sensor 26 auf, der mittelbar oder unmittelbar die Ist-Neigung der Sattelplatte 16 misst und an das Steuergerät 23 übermittelt. Bei dem Sensor 26 kann es sich um einen Winkelsensor handeln, der direkt den Winkel zwischen der Sattelplatte 16 und einem Motorwagen-Chassis 27 misst. Dabei wird davon ausgegangen, dass die Ist-Neigung der Sattelplatte 16 der Ist-Neigung $\alpha$ des Auflieger-Chassis 17 entspricht. Die Messung wird nicht durch eine Steigung oder ein Gefälle der Fahrbahnoberfläche 22 beeinflusst.

Alternativ kann es sich bei dem Sensor 26 um einen Beschleunigungssensor handeln, wie schon in Fig. 3 dargestellt.

Bezugszeichenliste (Teil der Beschreibung)

| | |
|---|---|
| 10 | Auflieger |
| 11 | Motorwagen |
| 12 | Achse |
| 13 | Achse |
| 14 | Achse |
| 15 | Fahrwerksebene |
| 16 | Sattelplatte |
| 17 | Auflieger-Chassis |
| 18 | Höhensensor |
| 19 | Höhensensor |
| 20 | Fahrwerksgerade |
| 21 | Senkrechte |
| 22 | Fahrbahnoberfläche |
| 23 | Steuergerät |
| 24 | Beschleunigungssensor |
| 25 | Senkrechte |
| 26 | Sensor |
| 27 | Motorwagen-Chassis |
| | |
| h1 | Höhe |

h3       Höhe
Δh       Höhendifferenz
L1       Strecke
L2       Strecke
L3       Strecke
α        Ist-Neigung
ΔSP      Sattelplattenhöhe

**Patentansprüche**

1. Verfahren zur Anpassung der Höhe eines Aufliegers (10) an die Höhe eines Motorwagens (11) mit Sattelplatte (16), wobei der Auflieger (10) ein Auflieger-Chassis (17), wenigstens eine Achse (12, 13, 14) und eine höhenverstellbare Federung aufweist, mit einer Ist-Neigung ($\alpha$) des Auflieger-Chassis (17) relativ zu einer Fahrwerksgeraden (20), welche in Fahrtrichtung und parallel zu einer Fahrbahnoberfläche (22) verläuft, mit den folgenden Schritten:

   a) Ermittlung der Ist-Neigung ($\alpha$) des Auflieger-Chassis (17) relativ zur Fahrwerksgeraden (20),
   b) Vergleich der Ist-Neigung ($\alpha$) mit einer Soll-Neigung des Auflieger-Chassis (17),
   c) Verstellung der höhenverstellbaren Federung, bis die Ist-Neigung ($\alpha$) der Soll-Neigung entspricht,

   **dadurch gekennzeichnet, dass** zur Ermittlung der Ist-Neigung ($\alpha$) wenigstens Signale eines Sensors (26) im Motorwagen (11) ausgewertet werden, wobei wenigstens Signale eines Sensors (26) zur Bestimmung der Neigung der Sattelplatte (16) ausgewertet werden.

2. Verfahren nach Anspruch 1, **dadurch gekennzeichnet, dass** zur Ermittlung der Ist-Neigung ($\alpha$) wenigstens Signale eines Sensors (18, 19, 24) im Auflieger (10) ausgewertet werden.

3. Verfahren nach Anspruch 2, **dadurch gekennzeichnet, dass** zur Ermittlung der Ist-Neigung ($\alpha$) wenigstens Signale von zwei in Fahrtrichtung mit Abstand zueinander angeordneten Höhensensoren (18, 19) ausgewertet werden.

4. Verfahren nach Anspruch 2 oder 3, **dadurch gekennzeichnet, dass** zur Ermittlung der Ist-Neigung ($\alpha$) wenigstens Signale eines Beschleunigungssensors (24) oder Winkelsensors ausgewertet werden.

5. Verfahren nach Anspruch 1, **dadurch gekennzeichnet, dass** wenigstens Signale eines Winkelsensors oder eines Beschleunigungssensors ausgewertet werden.

6. Verfahren nach einem der Ansprüche 1 bis 5, **dadurch gekennzeichnet, dass** als Soll-Neigung eine von Null verschiedene Neigung relativ zur Fahrwerksgeraden (20) vorgegeben wird.

7. Steuergerät (23), eingerichtet zur Durchführung des Verfahrens nach einem der Ansprüche 1 bis 6, mit Schnittstellen zur Ansteuerung einer höhenverstellbaren Federung eines Aufliegers (10) und Schnittstellen für Signale von Sensoren (18, 19, 24, 26) oder hierzu korrespondierenden Daten, sowie mit einer Software zur Durchführung des Verfahrens nach einem der Ansprüche 1 bis 6.

8. System zur Durchführung des Verfahrens nach einem der Ansprüche 1 bis 6, mit einem Steuergerät nach Anspruch 7, wenigstens einem Sensor (18, 19, 24, 26) zur Ermittlung einer Ist-Neigung eines Aufliegers (10), und einer höhenverstellbaren Federung für den Auflieger (10).

9. System nach Anspruch 8, **dadurch gekennzeichnet, dass** die höhenverstellbare Federung eine Luftfederung mit Tragbälgen ist.

10. Auflieger mit einem System nach einem der Ansprüche 8 bis 9.

**Claims**

1. A method for adjusting the height of a trailer (10) to the height of a motor vehicle (11) with a fifth-wheel plate (16), wherein the trailer (10) has a trailer chassis (17), at least one axle (12, 13, 14) and a height adjustable suspension, having an actual inclination ($\alpha$) of the trailer chassis (17) relative to a chassis line (20), which runs in the direction of traffic and parallel to a road surface (22), having the following steps:

a) Determining the actual inclination ($\alpha$) of the trailer chassis (17) relative to the chassis line (20),
b) Comparison of the actual inclination ($\alpha$) to a target inclination of the trailer chassis (17),
c) Adjustment of the height adjustable suspension, until the actual inclination ($\alpha$) of the target inclination,

**characterized in that** at least signals of a sensor (26) in the motor vehicle (11) are evaluated to determine the actual inclination (a), wherein at least signals of a sensor (26) are evaluated to determine the inclination of the fifth-wheel plate (16) .

2. The method according to claim 1, **characterized in that** at least signals of a sensor (18, 19, 24) in the trailer (10) are evaluated to determine the actual inclination ($\alpha$).

3. The method according to claim 2, **characterized in that** at least signals of two height sensors (18, 19) arranged in the direction of traffic at a distance to each other are evaluated to determine the actual inclination ($\alpha$).

4. The method according to claim 2 or 3, **characterized in that** at least signals of an acceleration sensor (24) or angle sensor are evaluated to determine the actual inclination ($\alpha$).

5. The method according to claim 1, **characterized in that** at least signals of an angle sensor or of an acceleration sensor are evaluated.

6. The method according to any of claims 1 to 5, **characterized in that** an inclination different from nil relative to the chassis line (20) is specified as target inclination.

7. A control unit (23), set up to carry out the method according to any of claims 1 to 6, having interfaces for controlling a height adjustable suspension of a trailer (10) and interfaces for signals of sensors (18, 19, 24, 26) or data corresponding thereto, as well as having a software for carrying out the method according to any of claims 1 to 6.

8. A system for carrying out the method according to any of claims 1 to 6, having a control unit according to claim 7, at least one sensor (18, 19, 24, 26) for determining an actual inclination of a trailer (10), and a height adjustable suspension for the trailer (10).

9. The system according to claim 8, **characterized in that** the height adjustable suspension is an air suspension with supporting bellows.

10. A trailer with a system according to any of claims 8 to 9.

**Revendications**

1. Procédé pour l'adaptation de la hauteur d'une semi-remorque (10) à la hauteur d'un véhicule à moteur (11) avec plaque de sellette (16), dans lequel la semi-remorque (10) présente un châssis de remorque (17), au moins un essieu (12, 13, 14) et un système de suspension réglable en hauteur, avec une inclinaison réelle ($\alpha$) du châssis de remorque (17) par rapport à une droite de châssis (20), laquelle s'étend dans le sens de marche et parallèlement à une surface de chaussée (22), avec les étapes suivantes :

a) la détermination de l'inclinaison réelle ($\alpha$) du châssis de remorque (17) par rapport à la droite de châssis (20),
b) la comparaison de l'inclinaison réelle ($\alpha$) avec une inclinaison de consigne du châssis de remorque (17),
c) le réglage du système de suspension réglable en hauteur, jusqu'à ce que l'inclinaison réelle ($\alpha$) corresponde à l'inclinaison de consigne,

**caractérisé en ce que** pour la détermination de l'inclinaison réelle ($\alpha$) au moins des signaux d'un capteur (26) dans le véhicule à moteur (11) sont évalués, dans lequel au moins des signaux d'un capteur (26) sont évalués pour la détermination de l'inclinaison de la plaque de sellette (16).

2. Procédé selon la revendication 1, **caractérisé en ce que** pour la détermination de l'inclinaison réelle ($\alpha$) au moins

des signaux d'un capteur (18, 19, 24) dans la remorque (10) sont évalués.

3. Procédé selon la revendication 2, **caractérisé en ce que** pour la détermination de l'inclinaison réelle ($\alpha$) au moins des signaux de deux capteurs de hauteur (18, 19) disposés dans le sens de marche à distance l'un de l'autre sont évalués.

4. Procédé selon la revendication 2 ou 3, **caractérisé en ce que** pour la détermination de l'inclinaison réelle ($\alpha$) au moins des signaux d'un capteur d'accélération (24) ou capteur d'angle sont évalués.

5. Procédé selon la revendication 1, **caractérisé en ce qu'**au moins des signaux d'un capteur d'angle ou d'un capteur d'accélération sont évalués.

6. Procédé selon l'une quelconque des revendications 1 à 5, **caractérisé en ce qu'**une inclinaison différente de zéro par rapport à la droite de châssis (20) est prédéfinie comme inclinaison de consigne.

7. Appareil de commande (23), conçu pour la mise en œuvre du procédé selon l'une quelconque des revendications 1 à 6, avec des interfaces pour la commande d'un système de suspension réglable en hauteur d'une remorque (10) et des interfaces pour des signaux de capteurs (18, 19, 24, 26) ou des données correspondant à ceux-ci, ainsi qu'avec un logiciel pour la mise en œuvre du procédé selon l'une quelconque des revendications 1 à 6.

8. Système pour la mise en œuvre du procédé selon l'une quelconque des revendications 1 à 6, avec un appareil de commande selon la revendication 7, au moins un capteur (18, 19, 24, 26) pour la détermination d'une inclinaison réelle d'une remorque (10), et un système de suspension réglable en hauteur pour la remorque (10).

9. Système selon la revendication 8, **caractérisé en ce que** le système de suspension réglable en hauteur est un système de suspension pneumatique avec des soufflets porteurs.

10. Remorque avec un système selon l'une quelconque des revendications 8 à 9.

Fig. 1

EP 3 659 836 B1

Fig. 2

Fig. 3

Fig. 4

EP 3 659 836 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007015954 A1
- DE 102007006265 A1
- FR 2672561 A
- DE 19752108 A1